# EUROPÄISCHE PATENTSCHRIFT

(11) **EP 0 542 812 B1**
(45) Veröffentlichungstag und Bekanntmachung des Hinweises auf die Patenterteilung: **20.03.1996**
(21) Anmeldenummer: 91914104.4
(22) Anmeldetag: 02.08.1991
(51) Int. Cl.: H04N 7/00, H04N 11/00

(54) **FERNSEHÜBERTRAGUNGSSYSTEM**
TELEVISION TRANSMITTING SYSTEM
SYSTEME DE TRANSMISSION DE TELEVISION

(30) Priorität: 07.08.1990 DE 4024991; 28.08.1990 DE 4027096
(43) Veröffentlichungstag der Anmeldung: 26.05.1993
(73) Patentinhaber: DEUTSCHE THOMSON-BRANDT GMBH, D-78048 Villingen-Schwenningen (DE)
(72) Erfinder: KRAUS, Uwe, D-7737 Bad Dürrheim (DE); RIEMANN, Uwe, D-3300 Braunschweig (DE); PLANTHOLT, Martin, D-6277 Bad Camberg 2 (DE)
(86) Internationale Anmeldenummer: EP9101454
(87) Internationale Veröffentlichungsnummer: WO9203017

(56) Entgegenhaltungen:
- EP-A- 0 311 188
- WO-A-89/02689
- WO-A-90/14732
- DE-A- 3 930 964
- DE-A- 3 936 179
- DE-C- 3 843 423

## Beschreibung

Die Erfindung betrifft ein Fernsehübertragungssystem mit kompatibler Übertragung von Zusatzinformationen.

### Stand der Technik

Für die Einführung eines 16:9-Breitbildformates in bestehende Fernsehstandards (z.B. PAL, SECAM, NTSC) mit dem Format 4:3 wird das sogenannte 'letterbox'-Verfahren diskutiert. Bei diesem Verfahren wird in kompatibler Weise auf dem 4:3-Empfänger die 16:9-Bildinformation mit schwarzen Streifen am oberen und unteren Bildrand dargestellt. Zur Anpassung der Geometrieverhältnisse auf dem 4:3-Empfänger bedarf es dazu einer vertikalen Transcodierung, die im sichtbaren Bildfenster auf dem 4:3-Empfänger nur 432 aktive Zeilen darstellt. Die restlichen 144 Zeilen des aktiven 4:3-Bildbereichs erscheinen auf dem 4:3-Empfänger als schwarze Streifen zu je 72 Zeilen am oberen und unteren Bildrand. Die Beschreibung eines entsprechenden Verfahrens findet sich in "Verbesserungsmöglichkeiten und Entwicklungstendenzen bei PAL", G. Holoch, Vortrag FKTG am 17.01.1989, Berlin.

In DE-A-4007092 ist ein Verfahren angegeben, das die Zusatzinformationen in den 'letterbox'-Streifen in farbträgerfrequenter Lage, d.h. auf den Farbträger aufmoduliert im Ultraschwarz-Bereich überträgt.

### Erfindung

Der Erfindung liegt die Aufgabe zugrunde, ein kompatibles Übertragungssystem anzugeben, welches Zusatzinformationen für einen 16:9-Empfänger mit einer verbesserten Rückwärtskompatibilität zu bekannten 4:3-Empfängern überträgt. Diese Aufgabe wird durch das in Anspruch 1 angegebene erfindungsgemäße Fernsehübertragungssystem gelöst.

Im Prinzip besteht das erfindungsgemäße Fernsehübertragungssystem darin, daß ein Videosignal in einer ersten Norm zum kompatiblen Empfang auf einem Empfänger der ersten Norm oder auf einem Empfänger einer zweiten Norm übertragen wird, insbesondere nach dem 'letterbox'-Verfahren, und zwar mit Zusatzinformationen Z₁ und/oder Z₂, insbesondere im Ultraschwarzbereich des Videosignals, wobei mit Hilfe von Filtermitteln eine Restseitenbandmodulation herbeigeführt wird und wobei die niederfrequenten Anteile der Zusatzinformationen einschließlich eines eventuellen Gleichspannungsanteiles in einer höherfrequenten Lage übertragen werden und wobei die Zusatzinformationen mit zwei um 90° gegeneinander versetzten Phasenlagen in Quadratur auf den Farbträger aufmoduliert sind und nur in den Bildbereichen des Videosignals angeordnet sind, die bei der Wiedergabe mit dem Empfänger der ersten Norm außerhalb des Bildbereichs für die zweite Norm liegen.

Vorteilhafte Weiterbildungen der Erfindung ergeben sich aus den abhängigen Patentansprüchen 2 bis 12.

Die zu übertragenden Zusatzinformationen bestehen im wesentlichen aus qualitätsverbessernden Signalen für den 16:9-Empfänger, die eine Auflösungserhöhung in vertikal-zeitlicher Richtung (vertikale Ortsfrequenzen und Zeitfrequenzen) und/oder in horizontaler Richtung (horizontale Ortsfrequenzen) bewirken. Unter Ausnutzung des Farbträgers als Modulationsträger lassen sich unterschiedliche Zusatzinformationen gleichzeitig übertragen, wenn die spektrale Übertragungskapazität durch Quadraturmodulation des Farbträgers doppelt genutzt wird. Eine verbesserte Kompatibilität zu bestehenden 4:3-Empfängern auch neuerer Technik (z.B. Kammfiltertechnik) wird erreicht, wenn die Zusatzinformationen für den 16:9-Empfänger nur in den vom 4:3-Empfänger nicht zu decodierenden Bildbereichen übertragen werden, d.h. in den schwarzen Streifen am oberen und unteren Bildrand des kompatiblen Empfängers. Dies gilt insbesondere für Phasenlagen von 45° und 225° für die Zusatzmodulation des Farbträgers.

### Zeichnungen

Anhand der Zeichnungen werden Ausführungsbeispiele der Erfindung beschrieben. Die Zeichnungen zeigen in:
- Fig. 1: Spektralverteilung (vertikale und horizontale Ortsfrequenzen) eines PAL-Signals;
- Fig. 2: Spektralverteilung von Zusatzinformationen Z₁, Z₂ bei Nutzung des PAL-Farbträgers in den 'letterbox'-Streifen;
- Fig. 3: einen bekannten zweidimensionalen Frequenzgang einer PAL-Laufzeit-Schaltung (PAL-Mittelung) zur Signalaufspaltung;
- Fig. 4: die Spektralverteilung von Zusatzinformationen Z₁, Z₂ bei Verwendung nicht zeilenalternierend geschalteter PAL-Farbträger in den 'letter-box'-Streifen;
- Fig. 5: bekannte Schaltung für PAL-Mittelung und Demodulation;
- Fig. 6: Bildung von Störkomponenten beim kompatiblen Empfänger;
- Fig. 7: Verfahren zur Reduktion der Störkomponenten für den kompatiblen Empfänger.

### Ausführungsbeispiele

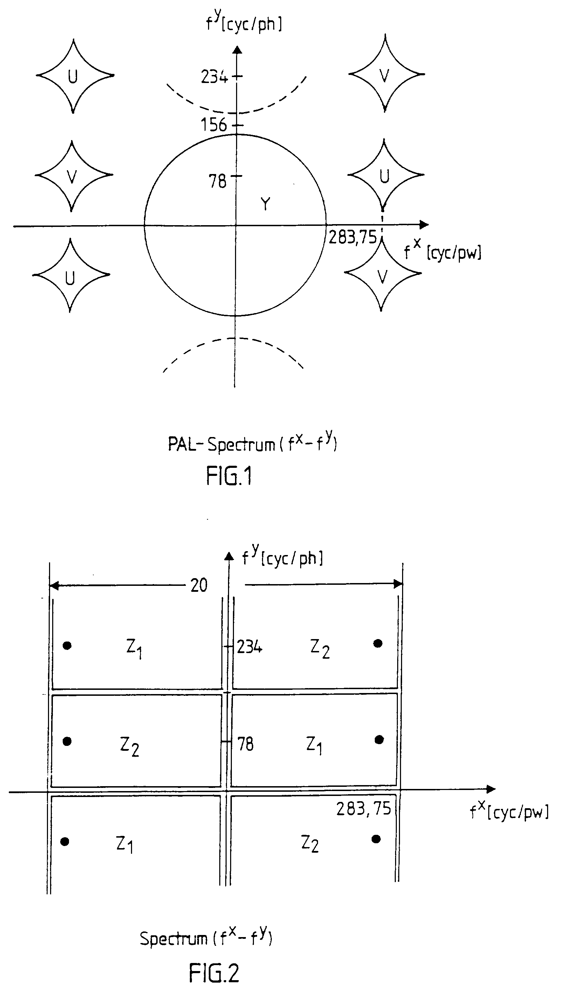

Fig. 1 zeigt die spektralen Wiederholungen von Luminanz- und Chrominanz-Komponenten eines PAL-codierten Signals in der zweidimensionalen Ortsfrequenz-Ebene f^{x}, f^{y}. Die Bandbegrenzungen in f^{x}- und f^{y}-Richtung sind willkürlich gewählt und dienen nur einer übersichtlichen Darstellung. Die Angaben in Schwingungen pro Bildhöhe [cyc/ph] und Schwingungen pro Bildbreite [cyc/pw] beziehen sich auf die Gesamtzeilenzahl bzw. Gesamtzeilendauer.
Für die Übertragung von Zusatzinformationen anstelle von Chrominanz-Komponenten in den 'letterbox'-Streifen kann vorteilhaft die gleiche Technik wie beim PAL-System mit Standardbaugruppen im Sender und Empfänger genutzt werden.

Fig. 2 stellt die maximal verfügbaren spektralen Bereiche für den Fall dar, daß Zusatzinformationen Z₁, Z₂ PAL-ähnlich codiert werden und in den 'letterbox'-Streifen überlappungsfrei übertragen werden. Um eine übersprechfreie Übertragung zu gewährleisten, müssen die Zusatzinformationen Z₁, Z₂ vertikal vorgefiltert werden (78 cyc/ph). Die horizontale Bandbreitenbegrenzung durch den PAL-Kanal 20 (5 MHz) läßt eine Zweiseitenbandübertragung der Zusatzinformationen nicht zu. Eine Restseitenbandübertragung mit Nyquistfilterung bei der Farbträgerfrequenz (Horizontalfilterung) ist geeignet, die Zusatzsignale nach Demodulation mit korrektem Amplitudenfrequenzgang zurückzugewinnen.

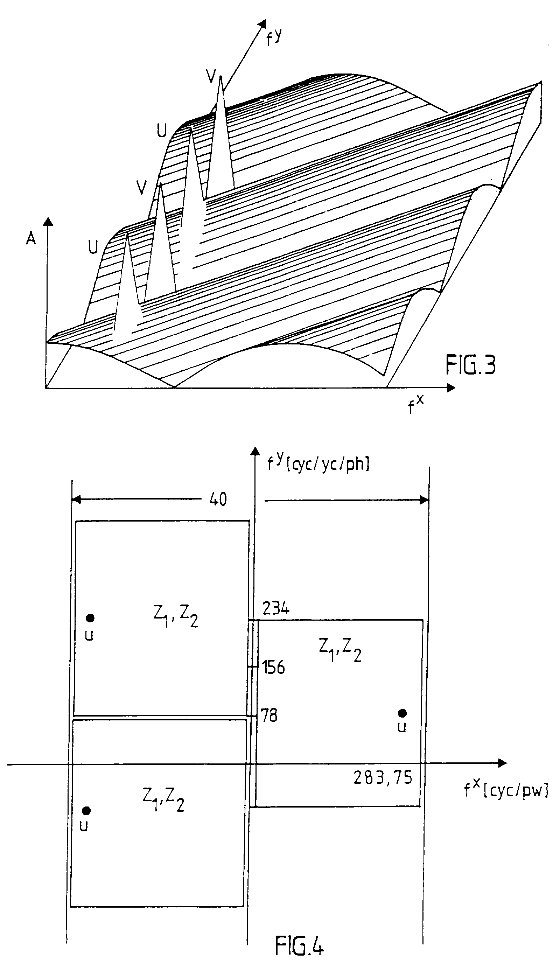

Im 16:9-Empfänger kann eine Standard-PAL-Laufzeit (PAL-Mittelung) zur Trennung der Zusatzinformationen Z₁, Z₂ vor der Demodulation in die Frequenzlage des Basisspektrums verwendet werden. Fig. 3 zeigt die Übertragungscharakteristik einer Standard-PAL-Laufzeit-Schaltung (PAL-Mittelung) im zweidimensionalen Ortsfrequenzbereich zur Separation der Chrominanzkomponenten U und V (hier: Ausfilterung der U-Komponente). Die U-Komponente liegt im Durchlaßbereich der Anordnung, während die V-Komponente in den Nullstellen des Frequenzganges liegt. Für die Gewinnung der V-Komponente wird ein zu Fig. 3 analoger Frequenzgang wirksam, der dann für U Nullstellen aufweist und V im Durchlaßbereich plaziert. Nach der Demodulation in die Basisbandlage muß im 16:9-Empfänger weiter eine vertikale Bandbegrenzung (78 cyc/ph) erfolgen, um vertikales Übersprechen zwischen den unterschiedlichen Zusatzinformationen Z₁ und Z₂ zu vermeiden.

Die Übertragung von Zusatzinformationen mit erhöhter Vertikalauflösung im Vergleich zu dem o.g. Verfahren ist möglich, wenn als Modulationsträger nur eine Komponerte des PAL-Farbträgers, z.B. der U-Träger, genutzt wird und der Spektralraum durch eine Quadraturmodulation koppelt belegt wird. Dabei wird der Farbträger in zwei um 90° gegeneinander versetzten Phasenlagen moduliert und die Phase des Farbträgers nicht mehr zeilenweise geschaltet. Die relative Lage des Farbträgers zum Burst-Referenzsignal ist für die Übertragung unerheblich, da die spektralen Wiederholungen nur durch die Verkopplung von Farbträger und Zeilenfrequenz bestimmt werden (Viertelzeilenoffset, 25 Hz-Versatz). Fig. 4 zeigt die spektralen Wiederholungen eines Basisspektrums, das in den 'letterbox'-Streifen auf den U-Träger aufmoduliert wurde. Hierdurch ist jetzt eine gegenüber dem o.g. Verfahren doppelt so große Vertikalauflösung (156 cyc/ph) übersprechfrei übertragbar. Es wird wie in Fig. 2 die PAL-Kanalbandbreite 40 ausgenutzt.

Die Ausnutzung eines geschalteten V-Trägers (spektrale Wiederholungen wie für V-Komponente in Fig. 1) ist ebenfalls möglich. Für die Quadraturmodulation muß die 90°-Phasenlage dann ebenfalls eine zeilenweise Umschaltung (180°-Phasendrehung) erfahren.

Für die Übertragung von Zusatzinformationen in 'letterbox'-NTSC- oder SECAM-Systemen läßt sich in ähnlicher Weise die beschriebene Übertragungstechnik anwenden. So kann beispielsweise die NTSC-Quadraturmodulation ebenfalls zur Übertragung von Zusatzinformationen in den 'letterbox'-Streifen benutzt werden. Die vertikale Auflösung der Zusatzinformationen beträgt dann 131 cyc/ph .

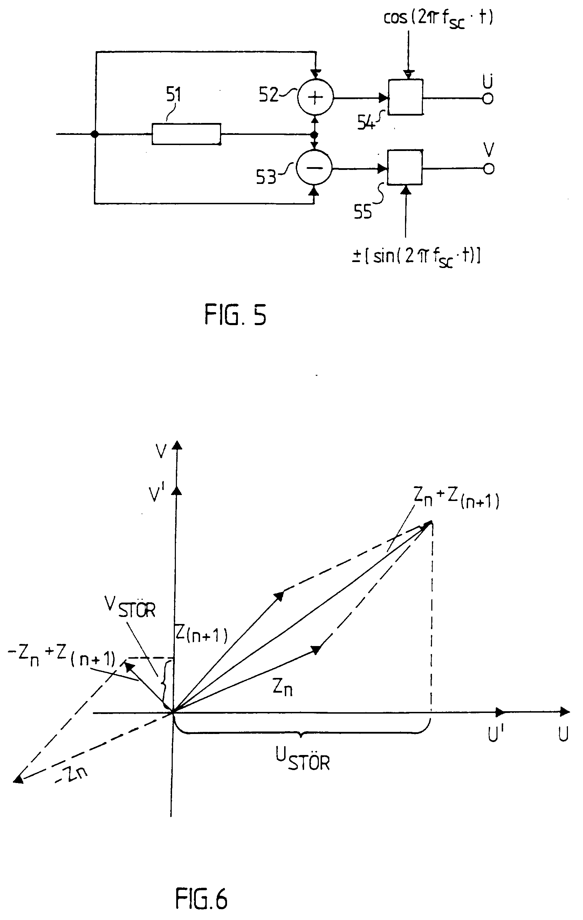

Bei Anwendung des erfindungsgemäßen Verfahrens im PAL-Standard kann der kompatible Empfang durch die Wahl einer bestimmten Phasenlage des PAL-Farbträgers als Modulationsfrequenz (4.43 MHz) vorteilhaft beeinflußt werden, weil dann die Sichtbarkeit der durch die übertragene Zusatzinformation bedingten Störungen in den Randstreifen reduziert wird. Standard-PAL-Empfänger enthalten zur Unterdrückung von Phasenfehlern eine sogenannte PAL-Mittelungsschaltung, an die sich die eigentliche PAL-Demodulation mit den U- und V-Demodulatoren anschließt. Fig. 5 zeigt eine Schaltung mit PAL-Mittelung, bestehend aus einem Laufzeitglied 51, einer Summationsstufe 52 und einer Subtraktionsstufe 53. An die Summationsstufe 52 schließt sich der U-Demodulator 54 und an die Subtraktionsstufe 53 der V-Demodulator 55 an.

Verwendet man zur Modulation der Zusatzinformationen Z₁ und Z₂ die zueinander um 90° versetzten Phasenlagen des Standard-PAL-Systems, wobei allerdings die V-Komponente nicht zeilenweise um 180° in der Phase gedreht wird, sondern konstant bleibt, ergeben sich die in Fig. 6 dargestellten Verhältnisse. In Fig. 6 stellen die Zeiger Zₙ und Z₍ₙ₊₁₎ die sich durch Quadraturmodulation mit den Zusatzinformationen Z₁, Z₂ ergebenden Summenzeiger der Zeile n und der darauf folgenden Zeile (n+1) dar. Die PAL-Mittelung im Empfänger (Fig. 5) liefert am Ausgang der Summationsstufe 52 einen Summenzeiger aus zwei benachbarten Zeilen [Zₙ + Z₍ₙ₊₁₎] sowie am Ausgang der Subtraktionsstufe 53 einen Differenzzeiger [-Zₙ + Z₍ₙ₊₁₎].

Die Projektion des Summenanzeigers [Z n + Z₍ₙ₊₁₎] auf die U-Achse liefert den durch den U-Demodulator 54 gebildeten U-Anteil in Basisbandlage, der im (kompatiblen) Standardempfänger als Störanteil U_{STÖR} sichtbar werden kann. Entsprechend wird der Basisband- V-Anteil, der sich durch Demodulation mit dem V-Demodulator 55 ergibt, durch die Projektion des Differenzzeigers [-Zₙ + Z₍ₙ₊₁₎] auf die [V-Achse angegeben. Dieser Anteil kann im Standardempfänger als V_{STÖR} sichtbar werden.

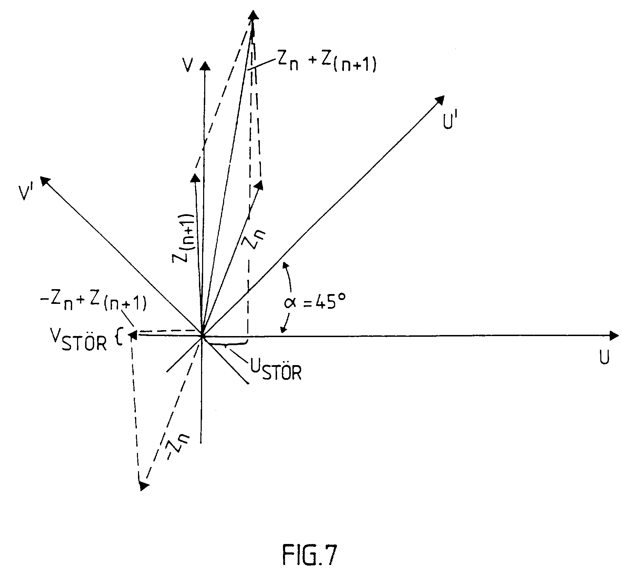

Eine noch geringere Störwirkung für den (kompatiblen) Standardempfänger läßt sich vorteilhaft erreichen, wenn ein Koordinatensystem U'-V' der in Quadratur modulierten Zusatzinformationen gegenüber dem Bezugssystem U-V, nach dem der Standardempfänger die Farbdemodulation vornimmt, um 45° gedreht wird. Fig. 7 zeigt die Phasendrehung des U'-V'-Koordinatensystems gegenüber dem U-V-Bezugssystem des Empfängers um 45°. Die Störkomponenten U_{STÖR}, V_{STÖR} sind jetzt in der Amplitude gegenüber Fig. 6 wesentlich reduziert.

Ebenso läßt sich eine geringere Störwirkung für den Standardempfänger erreichen, wenn das U'-V'-Koordinatensystem um 225° gedreht wird. Gegenüber der 45°-Drehung treten die Störkomponenten jetzt als Komplementärfarben zu der in Fig. 7 gezeigten Darstellung auf (die Projektionen fallen auf die negative U- bzw. V-Achse).

Besonders günstig für einen störungsfreien Empfang mit dem Standardempfänger ist es, wenn der Summenzeiger [Zₙ + Z₍ₙ₊₁₎] eine Lage von 45° im U'-V'-Koordinatensystem einnimmt und dann entsprechend Fig. 7 in Richtung der V-Achse im U-V-Koordinatensystem weist. Entsprechend weist dann der Differenzzeiger [-Zₙ + Z₍ₙ₊₁₎] in die negative U-Richtung. Die Projektionen auf die U-Achse (Summenzeiger) und auf die V-Achse (Differenzzeiger) ergeben dann den Wert Null und somit keine Störung.

Eine derartige Lage der Zeiger läßt sich erreichen, wenn die Modulatoren, die die Zusatzinformationen Z₁ und Z₂ in Quadraturlage modulieren, im Mittel mit gleichen Amplituden ausgesteuert werden. Über die Amplitudenstatistik der Zusatzinformationen lassen sich entsprechende Aussteuerungsfaktoren gewinnen.

Diese Aussteuerungsfaktoren können auch vorteilhaft entsprechend der jeweils aktuellen Bildstatistik dynamisch verändert werden, wobei dann ein entsprechendes Signal mitübertragen werden kann, mit dessen Hilfe der 16:9-Empfänger die jeweiligen Aussteuerungsfaktoren ermittelt und für die Demodulation der Zusatzinformationen Z₁ und Z₂ verwendet.

## Patentansprüche

1. Fernsehübertragungssystem zur Übertragung eines Videosignals in einer ersten Norm zum kompatiblen Empfang auf einem Empfänger der ersten Norm oder auf einem Empfänger einer zweiten Norm mit einem vergrößerten Bild-Seiten-Verhältnis, insbesondere für die Übertragung eines Videosignals nach dem Letterbox-Verfahren, mit Zusatzinformationen (Z₁, Z₂), die auf einen Träger aufmoduliert werden, dadurch gekennzeichnet, daß die Zusatzinformationen (Z₁, Z₂) in Quadratur auf den Farbträger aufmoduliert werden und danach mit Hilfe von Filtermitteln eine Restseitenbandfilterung herbeigeführt wird und die Zusatzinformationen nur in den Bildbereichen - insbesondere amplitudenmäßig im Ultraschwarzbereich - des Videosignals angeordnet sind, die bei der Wiedergabe mit dem Empfänger der ersten Norm räumlich außerhalb des Bildbereichs für die zweite Norm liegen.

2. System nach Anspruch 1, **dadurch gekennzeichne**t, daß eine erste Zusatzinformation (Z₁) auf den Farbträger in einer ersten Phasenlage und eine zweite, von der ersten verschiedene Zusatzinformation (Z₂), in einer zweiten Phasenlage auf den Farbträger aufmoduliert ist.

3. System nach Anspruch 2, **dadurch gekennzeichnet**, daß die zweite Phasenlage eine vorzeichenmäßig konstante Differenz von 90° zur ersten Phasenlage hat.

4. System nach Anspruch 2 oder 3, **dadurch gekennzeichnet**, daß die Zusatzinformationen (Z₁, Z₂) durch Filtermittel horizontal- und/oder mit einer ersten Grenzfrequenz vertikal-frequenzmäßig bandbegrenzt werden, wobei die erste Grenzfrequenz insbesondere einen Wert von etwa 156 cyc/ph hat.

5. System nach Anspruch 2, **dadurch gekennzeichnet**, daß eine der beiden Phasenlagen zeilenalternierend um 180° geschaltet wird und die Zusatzinformationen (Z₁, Z₂) durch Filtermittel horizontal- und/oder mit einer zweiten Grenzfrequenz vertikal-frequenzmäßig bandbegrenzt werden, wobei die zweite Grenzfrequenz insbesondere einen Wert von etwa 78 cyc/ph hat.

6. System nach Anspruch 4 oder 5, **dadurch gekennzeichnet**, daß die horizontalfrequente Bandbegrenzung für die Zusatzinformationen (Z₁, Z₂) durch Horizontalfrequenz-Filtermittel im Sender und/oder Empfänger für die zweite Norm für das Modulationssignal eine Nyquistflanke bezüglich der Farbträgerfrequenz bewirkt.

7. System nach einem oder mehreren der Ansprüche 4 bis 6, **dadurch gekennzeichnet**, daß die vertikal- und/oder horizontalfrequente Bandbegrenzung durch Filtermittel für beide Zusatzinformationen (Z₁, Z₂) gemeinsam geschieht.

8. System nach einem oder mehreren der Ansprüche 1 bis 7, **dadurch gekennzeichnet**, daß die Phasenlagen des die Zusatzinformationen (Z₁, Z₂) modulierenden Trägers um einen bestimmten Betrag gegenüber den bekannten PAL-Phasenlagen gedreht sind.

9. System nach Anspruch 8, **dadurch gekennzeichnet**, daß der Betrag 45° oder 225° ist.

10. System nach Anspruch 8 oder 9, **dadurch gekennzeichnet**, daß Farbträger-Modulatoren und im Empfänger für das zweite Bildformat entsprechende Demodulatoren (54, 55) für die Zusatzinformationen (Z₁, Z₂) im Mittel mit gleichhoher Amplitude ausgesteuert werden.

11. System nach Anspruch 8 oder 9, **dadurch gekennzeichnet**, daß Farbträger-Modulatoren und im Empfänger für das zweite Bildformat entsprechende Demodulatoren (54, 55) für die Zusatzinformationen (Z₁, Z₂) mit einer von einer Bildstatistik abhängigen Amplitude ausgesteuert werden.

12. System nach Anspruch 11, dadurch gekennzeichnet, daß ein zur Kennzeichnung der Aussteuer-Amplitude dienendes Signal mitübertragen wird.

## Claims

1. A television transmission system for the transmission of a video signal in a first standard for compatible reception on a receiver of the first standard or on a receiver of a second standard with an increased picture aspect ratio, in particular for the transmission of a video signal in accordance with the letterbox method, with items of additional information (Z₁, Z₂) which are modulated onto a carrier, characterised in that the items of additional information (Z₁, Z₂) are quadrature-modulated onto the chrominance carrier whereupon with the aid of filter means a vestigial sideband filtering is carried out and the items of additional information are arranged only in those picture zones - in particular in the blacker-than-black zone in respect of amplitude - of the video signal which on playback using the receiver of the first standard are spatially located outside the picture zone for the second standard.

2. A system as claimed in Claim 1, characterised in that a first item of additional information (Z₁) is modulated onto the chrominance carrier in a first phase position and a second item of additional information (Z₂), which differs from the first, is modulated onto the chrominance carrier in a second phase position.

3. A system as claimed in Claim 2, characterised in that the second phase position exhibits a difference of 90°, which is constant in respect of sign, relative to the first phase position.

4. A system as claimed in Claim 2 or 3, characterised in that the items of additional information (Z₁, Z₂) are band-limited by filter means in respect of the horizontal frequency and/or, with a first cut-off frequency, in respect of the vertical frequency, where the first cut-off frequency has in particular a value of approximately 156 cyc/ph.

5. A system as claimed in Claim 2, characterised in that one of the two phase positions is switched by 180° in alternate lines and that the items of additional information (Z₁, Z₂) are band-limited by filter means in respect of the horizontal frequency and/or, with a second cut-off frequency, in respect of the vertical frequency, where the second cut-off frequency has in particular a value of approximately 78 cyc/ph.

6. A system as claimed in Claim 4 or 5, characterised in that the horizontal-frequency band limitation for the items of additional information (Z₁, Z₂) by horizontal frequency filter means in the transmitter and/or in the receiver for the second standard brings about, for the modulation signal, a Nyquist flank in respect of the chrominance carrier frequency.

7. A system as claimed in one or several of Claims 4 to 6, characterised in that the vertical- and/or horizontal-frequency band limitation by filter means takes place commonly for both items of additional information (Z₁, Z₂).

8. A system as claimed in one or more of Claims 1 to 7, characterised in that the phase positions of the carrier which modulates the items of additional information (Z₁, Z₂) is rotated by a specified amount compared to the known PAL phase positions.

9. A system as claimed in Claim 8, characterised in that the amount is 45° or 225°.

10. A system as claimed in Claim 8 or 9, characterised in that chrominance carrier modulators and, in the receiver for the second picture format, corresponding demodulators (54, 55) for the items of additional information (Z_{1,} Z₂) are operated on average with amplitude of the same magnitude.

11. A system as claimed in Claim 8 or 9, characterised in that chrominance carrier modulators and in the receiver for the second picture format, corresponding demodulators (54, 55) for the items of additional information (Z_{1,} Z₂), are operated with an amplitude which is a function of a picture statistic.

12. A system as claimed in Claim 11, characterised in that a signal which serves to identify the modulation amplitude is additionally transmitted.

## Revendications

1. Système de transmission TV pour transmettre un signal vidéo selon une première norme pour permettre la réception compatible sur un récepteur de la première norme ou sur un récepteur d'une seconde norme ayant un format d'image agrandi, et notamment pour transmettre un signal vidéo selon le procédé dit "letterbox", avec des informations additionnelles (Z₁, Z₂) modulées sur une sous-porteuse, **système caractérisé en ce** que lesdites informations additionnelles (Z₁, Z₂) sont modulées en quadrature sur la sous-porteuse de chrominance, sachant qu'un filtrage à bande latérale résiduelle est effectué à l'aide de moyens de filtrage, et que lesdites informations additionnelles sont transmises uniquement dans celles des plages d'image du signal vidéo - et notamment dans la gamme ultra-noire par rapport aux amplitudes - qui, lors de la reproduction sur un récepteur de la première norme, sont situées en dehors de la plage d'image réservée à la seconde norme.

2. Système selon la revendication 1 caractérisé en ce qu'une information additionnelle (Z₁) est modulée dans une première position de phase sur la sous-porteuse de chrominance, tandis qu'une seconde information additionnelle (Z₂), différente par rapport à la première, est modulée dans une seconde position de phase sur la sous-porteuse de chrominance.

3. Système selon la revendication 2 caractérisé en ce que la seconde position de phase présente une différence de l'ordre de 90° par rapport à ladite première position de phase, sachant que le signe reste constant.

4. Système selon l'une quelconque des revendications 2 ou 3 caractérisé en ce que des moyens de filtrage effectuent une limitation de la bande de fréquence de ligne et/ou, avec une première fréquence de limitation, de la bande de fréquence de trame des informations additionnelles (Z₁, Z₂), sachant que ladite première fréquence de limitation possède une valeur de 156 cyc/ph environ.

5. Système selon la revendication 2 caractérisé en ce que l'une des deux positions de phase est commutée de 180 ° par lignes alternantes, et que des moyens de filtrage effectuent une limitation de la bande de fréquence de ligne et/ou, avec une seconde fréquence de limitation, de la bande de fréquence de trame des informations additionnelles (Z₁, Z₂), sachant que ladite seconde fréquence de limitation possède une valeur de 78 cyc/ph environ.

6. Système selon l'une quelconque des revendications 4 ou 5 caractérise en ce que la limitation de la bande de fréquence de ligne des informations additionnelles (Z₁, Z₂) à l'aide des moyens de filtrage de la fréquence de ligne prévus dans l'émetteur et/ou le récepteur selon la seconde norme, inculque un flanc de Nyquist au signal de modulation par rapport à la fréquence porteuse de chrominance.

7. Système selon l'une quelconque ou plusieurs des revendications 4 à 6 caractérisé en ce que la limitation des bande de fréquences de trame et/ou de ligne par lesdits moyens de filtrage est effectuée pour les deux informations additionnelles (Z₁, Z₂) en même temps.

8. Système selon l'une quelconque ou plusieurs des revendications 1 à 7 caractérisé en ce que les positions de phase de la sous-porteuse modulant lesdites informations additionnelles (Z₁, Z₂) sont tournées selon une certaine valeur par rapport aux positions de phase connues du standard PAL.

9. Système selon la revendication 8 caractérisé en ce que ladite valeur est de l'ordre de 45° ou 225°.

10. Système selon l'une quelconque des revendications 8 ou 9 caractérisé en ce que des modulateurs de la sous-porteuse de chrominance et des démodulateurs respectifs (54, 55) pour les informations additionnelles (Z₁, Z₂) prévus dans le récepteur du second format d'image, sont réglés, en moyenne, avec une amplitude de niveau identique.

11. Système selon l'une quelconque des revendications 8 ou 9 caractérisé en ce que des modulateurs de la sous-porteuse de chrominance et des démodulateurs respectifs (54, 55) pour les informations additionnelles (Z₁, Z₂) prévus dans le récepteur du second format d'image, sont réglés avec une amplitude en fonction de la statistique d'image.

12. Système selon la revendication 11 caractérisé en ce qu'un signal servant au repérage de l'amplitude de réglage est transmis simultanément.
